(19) Europäisches Patentamt
European Patent Office
Office européen des brevets

(11) Veröffentlichungsnummer: **0 261 385 B1**

(12) # EUROPÄISCHE PATENTSCHRIFT

(45) Veröffentlichungstag der Patentschrift: **15.04.92**

(51) Int. Cl.[5]: **C09D 5/44**, C09D 163/00, C09D 133/04, C08G 59/40

(21) Anmeldenummer: **87111853.5**

(22) Anmeldetag: **15.08.87**

(54) **Fremdvernetzende Bindemittelkombination für mit Wasser verdünnbare Lacke, an der Kathode abscheidbares Elektrotauchlacküberzugsmittel und deren Verwendung.**

(30) Priorität: **19.08.86 DE 3628121**

(43) Veröffentlichungstag der Anmeldung: **30.03.88 Patentblatt 88/13**

(45) Bekanntmachung des Hinweises auf die Patenterteilung: **15.04.92 Patentblatt 92/16**

(84) Benannte Vertragsstaaten: **AT BE CH DE ES FR GB IT LI NL SE**

(56) Entgegenhaltungen:
**EP-A- 0 052 831**
**FR-A- 2 379 588**

(73) Patentinhaber: **Herberts Gesellschaft mit beschränkter Haftung**
**Christbusch 25**
**W-5600 Wuppertal 2(DE)**

(72) Erfinder: **Saatweber, Dietrich, Dr., Dipl.-Chem.**
**Forststrasse 22**
**Wuppertal 21(DE)**
Erfinder: **Patzschke, Hans-Peter, Dr.**
**Am Heckendorn 71**
**Wuppertal 2(DE)**
Erfinder: **Hendrikx, Georg, Dr., Dipl.-Chem.**
**Nordrather-Strasse 76**
**W-5620 Velbert 15(DE)**
Erfinder: **Klein, Klausjörg, Dipl.-Ing.**
**Richard-Strauss-Allee 33**
**Wuppertal 2(DE)**

(74) Vertreter: **Türk, Gille, Hrabal**
**Brucknerstrasse 20**
**W-4000 Düsseldorf 13(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 261 385 B1

## Beschreibung

Die Erfindung betrifft eine fremdvernetzende Bindemittelkombination für mit Wasser verdünnbare Lacke, ein an der Kathode abscheidbares wäßriges Elektrotauchlacküberzugsmittel (KTL-Bad) und dessen Verwendung zum Beschichten von Gegenständen.

Als Elektrophorese-Lacke oder EC-Lacke werden heute großtechnisch an der Kathode abscheidbare Elektrotauchlacküberzugsmittel eingesetzt, die auf Basis von Epoxidharzen hergestellt werden. Sie geben einen hohen Umgriff und sehr guten Korrosionsschutz auch auf nicht-phosphatierten Blechen. Die thermische Vernetzung dieser Bindemittel erfolgt nach unterschiedlichen Verfahren , z.B. durch Reaktionen mit blockierten Polyisocyanaten, durch Zusatz von umesterungsfähigen Vernetzungsmitteln oder auch durch Reaktion von ungesättigten Doppelbindungen (DE-A- 27 49 776; DE-A-34 36 345). Bindemittel dieser Art können zu Oberflächenstörungen wie Krater führen, die bei Serienlackierungen zu unerwünschten Ausbesserungsarbeiten führen. Auch sind die Elastizitäts- und Steinschlageigenschaften verbesserungsbedürftig.

Eine weitere Materialklasse mit zunehmender Bedeutung sind die auf Acrylatharzen basierenden KTL-Materialien, wie in der DE-A-34 36 346 beschrieben. Sie werden wegen ihrer geringen Vergilbungsneigung und hohen Wetterbeständigkeit eingesetzt, erreichen jedoch bei schwankenden Phosphatierungsqualitäten nicht das gewünschte Korrosionsschutzniveau.

Der Erfindung liegt daher die Aufgabe zugrunde eine Bindemittelkombination sowie an der Kathode abscheidbare wäßrige Elektrotauchlacküberzugsmittel bereitzustellen, die die vorstehenden Nachteile verringern und zu verbesserten Lacken führen.

Diese Aufgabe wird überraschenderweise dadurch gelöst, daß als Basisharz Gemische aus Aminoepoxiden und aminogruppenhaltigen Acrylatharzen eingesetzt werden.

Gegenstand der Erfindung sind daher fremdvernetzende Bindemittelkombinationen und diese enthaltende an der Kathode abscheidbare wäßrige Elektrotauchlacküberzugsmittel (KTL-Bäder) und deren Verwendung zum Beschichten von Gegenständen mit elektrisch leitenden Oberflächen, gemäß den Patentansprüchen.

Die erfindungsgemäße fremdvernetzende Bindemittelkombination für mit Wasser verdünnbare Lacke enthält

A) 1 bis 99 Gew.-% eines primäre und/oder sekundäre Hydroxylgruppen und primäre, sekundäre und/oder tertiäre Aminogruppen enthaltenden organischen Kunstharz-Bindemittels auf der Basis von Epoxidharzen und

B) 99 bis 1 Gew.-% primäre, sekundäre und/oder tertiäre Aminogruppen enthaltendes organisches Kunstharz-Bindemittel, hergestellt aus radikalisch polymerisierbaren Monomeren, gegebenenfalls neben üblichen Hilfs-und Zusatzstoffen und z.B. Vernetzungsmitteln (als Komponenten C) ).

Bei der Komponente A) handelt es sich bevorzugt um ein durch Neutralisation mit organischen Säuren wasserverdünnbares Amino-Epoxidharz mit einer
Aminzahl von 30 bis 150 (mgKOH pro g Festharz)
einer Hydroxyzahl von
50 bis 500 (mgKOH pro g Festharz)
einer mittleren Molmasse ($\overline{M}n$) von
250 bis 10 000
bevorzugt 300 bis 5000,
und einer
Viskosität von 0,1 bis 10 Pa•s,
besonders 0,5 bis 5 Pa•s in 50%iger Lösung in Monoglykolethern bei 25 °C.

Die Komponente B) ist bevorzugt ein nach Neutralisation mit organischen Säuren wasserverdünnbares Poly(meth)acrylatharz mit einer
Aminzahl von 30 bis 150,
bevorzugt 40 bis 100(mgKOH pro g Festharz),
einer Hydroxylzahl von
30 bis 450,
bevorzugt 50 bis 200 (mgKOH pro g Festharz),
einer mittleren Molmasse ($\overline{M}n$) von
1000 bis 500 000
besonders 3000 bis 100 000gemessen durch Gelpermeationschromatographie, geeicht mit Polystyrol-Fraktionen
und einer
Viskosität von 0,1 bis 10 Pa•s,

besonders 0,5 bis 5 Pa•s in 50%iger Lösung in Butoxyethanol bei 25 °C,
und einer Glasübergangstemperatur errechnet aus den Glasübergangstemperaturen der Homopolymerisate von
-50 bis +150 °C,
besonders -20 bis +50 °C.

Die geeigneten mittleren Molmassen bzw. Viskositäten können auch dadurch erhalten werden, daß Harze mit höherer und niedrigerer Viskosität bzw. Molmasse vermischt werden.

Das als Komponente C) gegebenenfalls vorhandene Vernetzungsmittel hat mindestens zwei reaktive Gruppen pro Molekül und weist eine mittlere Molmasse ($\overline{M}n$) von 170 bis 10 000, bevorzugt 250 bis 5000 und besonders bevorzugt 500 bis 3000 auf. Als funktionelle Gruppen kommen infrage:

a. blockierte Isocyanatgruppen ,
b. umesterungsfähige Estergruppen und/oder
c. reaktionsfähige, aktivierte Doppelbindungen.

Das Kunstharz-Bindemittel A) enthält mindestens eine Aminogruppe pro Molekül. Die untere Grenze der Aminzahl sollte bevorzugt 45, besonders bevorzugt 70, die obere Grenze dagegen sollte bevorzugt bei 120, besonders bevorzugt bei 100 liegen. Ist die Aminzahl zu niedrig, so ist die Löslichkeit zu gering oder es entstehen durch einen zu hohen Neutralisationsgrad zu saure pH-Werte in den Abscheidungsbädern. Ist die Aminzahl zu hoch, so entsteht eine schlecht haftende Filmbindung bei der Abscheidung oder eine blasige Oberfläche.

Beispiele für Amino-Epoxidharze sind Umsetzungsprodukte von epoxidgruppenhaltigen Harzen mit vorzugsweise endständigen Epoxidgruppen aus den Gruppen Polyglycidylether, Polyglycidylester und Polyglycidylamine mit gesättigten und/oder ungesättigten sekundären und/oder primären Aminen bzw. Aminoalkoholen. Diese können am Alkylrest durch mindestens eine primäre und/oder sekundäre Hydroxylgruppe, durch die Dialkylaminogruppe und/oder durch eine primäre Aminogruppe, die durch Ketiminbildung vorübergehend geschützt wird, modifiziert sein.

Hydroxylgruppenhaltige Amino-Epoxidharze werden zweckmäßig aus Polyglycidylethern mit mindestens einer, bevorzugt zwei 1,2-Epoxidgruppen pro Molekül erhalten. Unter Polyglycidylether im Rahmen dieser Erfindung werden vorzugsweise solche Polyglycidylether der allgemeinen Formel

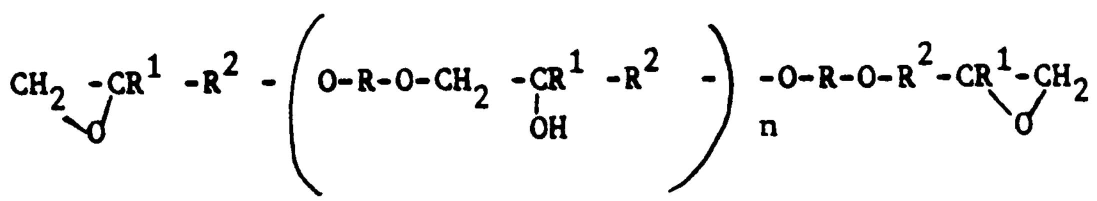

mit

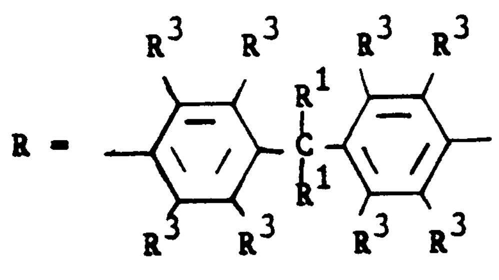

$R^1$ = -H und/oder $-C_mH_{2m+1}$
$R^2$ = $-(CR^1_2)_m-$, bevorzugt $-CH_2-$
$R^3$ = $-R^1$, Halogen oder bevorzugt -H
n = 0 bis 8, bevorzugt 1 bis 6
m = 1 bis 8, bevorzugt 1

verstanden.

Diese Polyglycidylether haben eine mittlere Molmasse ($\overline{M}n$) von etwa 300 bis 5000 und ein Epoxid-Äquivalentgewicht von etwa 170 bis 2500. Solche Harze sind Umsetzungsprodukte von Epichlorhydrin oder

Methylepichlorhydrin mit Dihydroxy-diphenylmethan (Bisphenol F) oder Dihydroxy-diphenylpropan (Bisphenol A), sowie mit Dihydroxy-benzophenon oder Dihydroxy-naphthalin. Polyepoxide mit geeignetem Molekulargewicht werden entweder durch Auswahl der Mol-Verhältnisse von Bisphenol und Epichlorhydrin oder durch Reaktion der monomeren Diglycidylverbindungen mit weiterem Bisphenol unter Zusatz von Katalysatoren wie Lewis-Säuren oder Phosphoniumsalzen hergestellt.

Die Epoxidharze können vollständig oder teilweise hydriert sein oder in Gemischen mit unterschiedlicher Struktur und Molmasse eingesetzt werden. So wird zum Elastifizieren ein Teil des beschriebenen Polyglycidylethers durch aliphatische Polyglycidylether der Formel

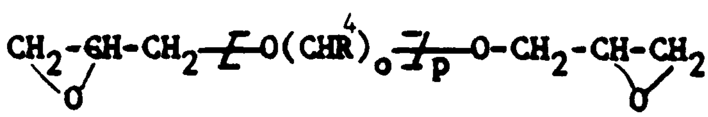

ersetzt, wobei

- $R^4$ = H oder ein niedriger, gegebenenfalls mit verschiedenen Substituenten versehener Alkylrest ist und
- o = 2 bis 6 und
- p = 5 bis 50

bedeutet. Beispiele sind Polypropylenglykol oder Polybutylenglykol mit verschiedenem Molekulargewicht. Die modifizierten Epoxidharze können auch durch Reaktion mit langkettigen Polyalkoholen wie Hexandiol-1.6, Neopentylglykol, Bisethoxyliertes Neopentylglykol, Hydroxypivalinsäure-neopentylglykolester und Bis-(hydroxymethyl)-cyclohexan, Monoanhydro-pentaerythrit sowie Polytetrahydrofurandiol, Polycaprolactondiol, Polycaprolactamdiol oder Polybutadiendiol in Gegenwart von geeigneten basischen oder sauren Katalysatoren wie Borfluorid-Amin-Komplexen umgesetzt sein. Während Polyalkohole mit primären OH-Gruppen sich bei geeigneter Katalyse direkt mit Polyglycidylethern umsetzen lassen, werden sekundäre OH-Gruppen zunächst mit Diisocyanat umgesetzt. Das erhaltene NCO-terminierte Reaktionsprodukt kann dann ohne Schwierigkeiten als Brücke zwischen 2 Mol Polyglycidylether unter Vergrößerung des Molekulargewichts und der Funktionalität eingebaut werden.

Das Amino-Epoxidharz kann auch zum Senken der Aminzahl mit gesättigten oder ungesättigten Polycarbonsäuren und/oder Hydroxycarbonsäuren modifiziert sein. Aliphatische, cycloaliphatische und/oder aromatische Polycarbonsäuren verschiedener Kettenlänge sind beispielsweise Adipinsäure, Sebacinsäure, Fumarsäure, Isophthalsäure oder dimere Fettsäure. Als Hydroxyalkylcarbonsäuren werden Milchsäure, Dimethylolpropionsäure oder auch carboxyl- und hydroxylgruppenhaltige Polyester verstanden. Bei der Umsetzung von überschüssigem Polyglycidylether mit niedrigem Molekulargewicht mit Polycarbonsäuren und/oder Polyalkoholen werden als Zwischenstufe modifizierte Polyglycidylether erhalten, die dann weiter mit Aminen und/oder Aminoalkoholen reagieren.

Es können auch heterocyclische Polyepoxidverbindungen verwendet werden, wie 1.3-Diglycidyl-5.5-dimethylhydantion, Triglycidylisocyanurat oder Diepoxide aus Bisimiden. Eine andere geeignete Klasse von Polyepoxiden sind Polyglycidylether von phenolischen Novolakharzen, wodurch die Funktionalität von 2 bis auf etwa 6 Glycidylgruppen pro Molekül gesteigert werden kann. Durch Defunktionalisieren mit langkettigen Alkylphenolen wie Dodecylphenol können zusätzlich elastifizierende Elemente eingebaut werden. Vorteilhafterweise können auch Polyglycidylester von Polycarbonsäuren wie Hexahydrophthalsäurediglycidylester, Tetrahydrophthalsäurediglycidylester oder Fumarsäurediglycidylester verwendet werden.

Das Einführen der Aminogruppen erfolgt entweder durch Addition von NH-reaktiven Verbindungen an die Epoxidgruppe oder durch Umsetzen der Hydroxylgruppen des Grundharzes mit basischen Monoisocyanaten, die durch Reaktion von aromatischen und/oder aliphatischen und/oder cycloaliphatischen Di- oder Polyisocyanaten mit Dialkylaminoalkanol (vgl. DE-A-27 07 405) entstehen.

Als NH-reaktive Verbindungen werden verwendet primäre Monoalkylamine wie Dialkylaminoalkylamin und/oder bevorzugt sekundäre Monoamine wie Dialkylamine, Monoalkylhydroxyalkylamine oder Dihydroxyalkylamine. Beispiele für einsetzbare Verbindungen sind Diethylamin, Dimethylaminopropylamin, N-Methylaminoethanol oder Diethanolamin oder auch cyclische Amine, wie Morpholin oder Oxazolidin. Beim Einsatz von primären Aminen wie Octylamin, Monoethanolamin, Dimethylaminopropylamin, Diethylaminoethylamin, Dimethylaminoneopentylamin oder Methoxypropylamin reagiert das Amin mit der Epoxidgruppe in Abhängigkeit von den angebotenen stöchiometrischen Verhältnissen mit 1 bis 2 Epoxidgruppen unter Molekülvergrößerung. Mit sekundären Diaminen tritt eine Kettenverlängerung ein. Als sekundäre Diamine, bevorzugt langkettige Diamine, werden N,N'-Dialkyldiaminoalkane oder Umsetzungsprodukte von gesättigten Glycidylethern oder -estern oder Epoxyalkanen mit primären Diamino-alkanen verwendet wie das Additionsprodukt

von Hexandiamin-1.6 mit 2 Mol Glycidylester der Versaticsäure (α-verzweigte Monocarbonsäuren, besonders mit $C_9$-$C_{11}$). Als Monoepoxide können für diesen Zweck auch gesättigte oder ungesättigte Glycidylether oder α-Epoxide verschiedener Kettenlänge wie Dodecen-1-oxid oder Butylenoxid eingesetzt werden. Die geeignete Zahl an Hydroxylgruppen entsteht dabei einmal automatisch aus der Epoxidgruppe bei der Addition der sekundären Aminogruppen, zum anderen kann sie durch Einsatz von Hydroxyalkylaminen gesteuert werden.

Die Molverhältnisse zwischen epoxid- und aminogruppenhaltigen Verbindungen sind so zu wählen, daß der vollständige Einbau des Amins gewährleistet ist, weil durchbruchartige Oberflächenstörungen beim elektrophoretischen Beschichten auftreten können, d.h. ein geringfügiger Überschuß an Epoxidgruppen ist vorteilhaft.

Es können alle Amine im Gemisch mit den Epoxidgruppen umgesetzt oder es kann stufenweise vorgegangen werden, d.h. ein oder mehrere basische epoxidgruppenhaltige Zwischenprodukte können in verschiedener Reihenfolge hergestellt werden. Die Reaktion der Amine beginnt schon bei Raumtemperatur und ist im allgemeinen exotherm. Um eine vollständige Umsetzung zu erreichen, ist es in der Regel notwendig, die Temperatur zeitweise auf etwa 50 bis 120 °C zu erhöhen. Das 1.2-epoxidgruppenhaltige Harz wird vor Zugabe des Amins in organischen Lösemitteln wie Xylol, Methylisobutylketon, die später vor dem Verdünnen abdestilliert werden müssen, oder in Lösemitteln wie Ethoxyethanol, Ethoxypropanol, Diethylenglykoldimethylether oder Diacetonalkohol, die in Lösung bleiben können, gelöst. Um überschüssiges Amin zu entfernen, wird gegebenenfalls ein Dünnschichtverdampfer oder eine Wasserdampfdestillation eingesetzt.

Das Amin-epoxidharz der Komponente A) kann durch Einsatz entsprechender gesättigter oder ungesättigter Verbindungen modifiziert werden, um optimale lacktechnische Eigenschaften zu erzielen. Ungesättigte Doppelbindungen werden entweder direkt durch Addition an die Epoxidgruppen oder indirekt durch Umsetzen der Hydroxylgruppen des Grundharzes mit ungesättigten Monoisocyanaten eingeführt, die durch Reaktion von aromatischen und/oder aliphatischen und/oder cycloaliphatischen Di- oder Polyisocyanaten mit α,β-ungesättigten Monocarbonsäuren oder entsprechenden Carbonsäureamiden sowie Hydroxyalkyl(meth)-acrylaten oder Dicarbonsäureestern von ungesättigten Alkoholen wie Allylalkohol oder Hydroxyalkyl(meth)-acrylaten erhalten werden und wie sie in der DE-A-27 07 482 beschrieben sind.

Es werden dabei Verbindungen ausgewählt, die aufgrund ihrer Struktur im Molekülverband thermisch stabile Urethangruppen ergeben. Die direkte Addition an die Epoxidgruppe kann beispielsweise mit Diallylamin, ungesättigten Fettaminen oder auch ungesättigten Fettsäuren erfolgen. Der Einbau ungesättigter Gruppen kann auch über das Kettenverlängerungsmittel erfolgen. So werden ungesättigte Monoepoxide an Di- oder Polyaminen mit mindestens zwei primären Aminogruppen oder mindestens einer primären und einer sekundären Aminogruppe addiert, wie Hexandiamin-1.6, 3-Aminomethylaminopropylamin, Diethylentriamin, Trimethylhexamethylendiamin und Isophorondiamin, entsprechend der Formel

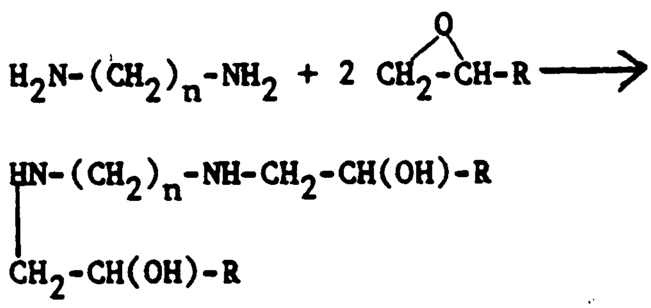

worin bedeuten:

R = $-CH_2-O-CH_2-CH=CH_2$ ,

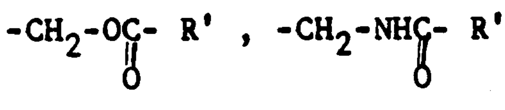

R' = ungesättigter Kohlenwasserstoffrest von Monocarbonsäuren. ($C_2$ bis $C_{18}$)

Als ungesättigte Monoepoxidverbindungen können, wie in der DE-A-31 22 641 beschrieben, dabei verwendet werden:

a) Glycidylester von linearen oder verzweigten, isoliert oder konjugiert ungesättigten $C_3$ bis $C_{18}$-Monocarbonsäuren,

b) Glycidylether von linearen oder verzweigten, isoliert oder konjugiert ungesättigten $C_3$ bis $C_{18}$-Monoalkoholen.

Wesentliche Eigenschaftsverbesserungen werden nach der DE-A-33 36 746 gefunden, wenn Amin-Epoxid-Harzmoleküle mindestens ein molekülvergrößerndes Diamin der Formel

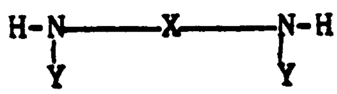

(I)

eingebaut enthalten, worin Y für -H oder $C_mH_{2m+1}$ (m = 1 bis 8) oder einen zum Defunktionalisieren verwendeten organischen Rest, der durch Umsetzung der primären Aminogruppe mit Monoepoxiden gebildet wird, und X eine Molekülgruppierung mit mindestens einer Amid-, Harnstoff-und/oder Urethangruppe darstellen, wobei diese Gruppen an die Stickstoffatome der Formel (I) über Alkylengruppen mit 2 bis 16 C-Atomen gebunden sind.

Ein amidgruppenhaltiges Diamin wird durch Kondensation einer Aminocarbonsäure mit einem primären Diamin oder von 1 Mol Dicarbonsäure mit 2 Mol Diamin erhalten. Ein harnstoffgruppenhaltiges Diamin wird durch Addition von Diaminoalkanen an Polyisocyanate mit mindestens zwei Isocyanatgruppen hergestellt. So können 2 Mol primäres oder sekundäres Diamin oder 1 Mol primäres oder sekundäres Monoamin und 1 Mol primäres Diamin mit 1 Mol Diisocyanat umgesetzt werden.

Für die Erfindung müssen für die unterschiedlich ablaufenden Vernetzungsreaktionen jedoch stets Hydroxylgruppen vorhanden sein. Die im Molekül vorhandene Hydroxylzahl (ausgedrückt in mg KOH pro Gramm Festharz) ist maßgebend für die Vernetzungsfähigkeit des Films. Sie sollte über 50, vorzugsweise über 100, besonders vorteilhaft über 150 liegen. Die obere Grenze der Hydroxylzahl liegt bei 400, vorteilhafter unter 300. Ist die Hydroxylzahl zu niedrig, so entstehen bei der Vernetzung Filme, die noch in organischen Lösemitteln wie Methylethylketon löslich sind. Ist die Hydroxylzahl dagegen zu hoch, so wird der Film zu spröde und bleibt eventuell auch zu hydrophil. Im Molekül müssen mindestens zwei vernetzungsfähige, bevorzugt primäre Hydroxylgruppen vorliegen.

Die für den Vernetzungsprozeß wichtigen primären und/oder sekundären Hydroxylgruppen können anteilweise durch primäre und/oder sekundäre Aminogruppen ersetzt werden. Das Einführen von primären Aminogruppen in den Harzgrundkörper erfolgt vorzugsweise durch Umsetzen von mindestens einer, bevorzugt mindestens zwei Epoxidgruppen pro Molekül enthaltenden Harzen mit einem amino- und/oder hydroxylgruppenhaltigen Ketimin und/oder Aldimin und/oder Polyamin. Bei den bevorzugten Ketiminen handelt es sich um Umsetzungsprodukte aus Ketonen und sekundäre Aminogruppe enthaltenden Alkylaminen wie Methylisobutylketon und Diethylentriamin.

Die Ketimine werden nach bekannten Methoden durch Wasserabspaltung aus den entsprechenden Polyaminen der allgemeinen Struktur $R-NH-R-NH_2$ oder den entsprechenden Aminoalkoholen der allgemeinen Struktur $HO-R-NH_2$ und den geeigneten aliphatischen Ketonen wie Diethylketon, Methylisobutylketon, Ethyl-n-propylketon oder auch Cyclopentanon, Cyclohexanon, Acetophenon usw. hergestellt. Die Reaktionsbedingungen (Reaktionstemperatur, Auswahl des Lösemittels) müssen so geführt werden, daß keine die Ketiminbindung zersetzende Substanzen wie Wasser in dem Reaktionsprodukt vorhanden bleiben.

Das Ketimin schützt die primäre Aminogruppe so (vgl. US-A-3 523 925), daß sie über eine weitere funktionelle Gruppe, z.B. eine Hydroxylgruppe oder bevorzugt eine sekundäre Aminogruppe ohne Schwierigkeiten mit dem Epoxidgrundharz umgesetzt werden kann. Durch die Wahl der Molverhältnisse der eingesetzten Komponenten muß gewährleistet sein, daß kein unumgesetztes niedrigmolekulares Amin im Ansatz zurückbleibt, weil sonst durchbruchartige Oberflächenstörungen beim elektrophoretischen Beschichten auftreten. Die Reaktion der sekundären Aminogruppe des Polyaminoketimins mit der Epoxidgruppe beginnt schon bei Raumtemperatur und ist im allgemeinen exotherm. Um eine vollständige Umsetzung zu erreichen, ist es in der Regel notwendig , die Temperatur zeitweise auf 50 bis 120 ° C zu erhöhen.

Die Komponente B) der erfindungsgemäßen Bindemittelkombination stellt ein primäre, sekundäre und/oder tertiäre Aminogruppe enthaltendes organisches Kunstharz-Bindemittel dar, das aus radikalisch polymerisierbaren Monomeren erhältlich ist. Bevorzugt handelt es sich dabei um ein Poly(meth)acrylatharz, insbesondere um eines, das durch Neutralisation mit organischen Säuren mit Wasser verdünnbar ist.

Mit Wasser verdünnbare Amino-poly(meth)acrylate werden nach dem Stand der Technik, wie er beispielsweise in der DE-A-15 46 854, DE-A-20 57 799 oder der DE-A-23 25 177 beschrieben wird, hergestellt. Als radikalisch polymerisierbare Monomere kommen beispielsweise ethylenisch ungesättigte

Monomere infrage, wobei die üblichen Einschränkungen für Copolymerisationen gelten, die durch das Q- und e-Schema nach Alfrey und Price gelten, bzw. die Copolymerisationsparameter vorgegeben sind ( vgl. Brandrup und Immergut, Polymer Handbook, 2nd ed. John Wiley + Sons, New York,1975).

Zur Herstellung der Komponente B) werden Mischungen verschiedener ungesättigter Monomerer verwendet, die entweder basische Stickstoffatome enthalten oder in die durch chemische Umsetzungen ein solches basisches Stickstoffatom eingeführt werden kann. So basiert die Komponente B) beispielsweise auf jeweils radikalisch polymerisierbaren

a) 6 bis 40 Gewichtsteilen aminogruppenhaltige Monomeren,

b) 4 bis 50 Gewichtsteilen hydroxylgruppenhaltigen Monomeren und

c) 10 bis 90 Gewichtsteilen weiterer radikalisch polymerisierbarer Monomere ,die außer einer ungesättigten Doppelbindung keine weiteren reaktiven Gruppen enthalten

wobei gegebenenfalls bis zu 10 Gewichtsteile der Komponente c) durch radikalisch polymerisierbare polyungesättigte Monomere ersetzt sind.

Die radikalisch polymerisierbaren aminogruppenhaltigen Monomeren und hydroxylgruppenhaltigen Monomeren müssen nicht als Gemisch vorgelegt werden. Es können auch Monomerarten eingesetzt werden, die sowohl Aminogruppen als auch Hydroxylgruppen gleichzeitig enthalten. Für diesen Fall werden 8 bis 60 Gewichtsteile der aminogruppen-und hydroxylgruppenhaltigen Monomeren und 10 bis 90 Gewichtsteile der radikalisch polymerisierbaren Monomeren, die keine weiteren reaktiven Gruppen enthalten, eingesetzt, wobei gegebenenfalls bis zu 10 Gewichtsteile der letzteren radikalisch polymerisierbare polyungesättigte Monomere sind.

Als radikalisch polymerisierbare aminogruppenhaltige bzw. N-gruppenhaltige Monomere werden beispielsweise Monomere der folgenden allgemeinen Formel eingesetzt:

$R\text{-}CH=CR'\text{-}X\text{-}A\text{-}N(R'')_2$

worin

R = -R' oder $-X-C_nH_{2n+1}$

R' = -H oder $-C_nH_{2n+1}$

R'' = -R', $-C_nH_{2n}OH$ und/oder $-C_nH_{2n}NR_2$

X = -COO-, -CONH- oder -O-

A = $-C_nH_{2n}-$ oder

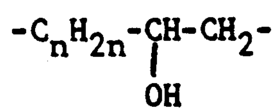

und

n = 1 bis 8, bevorzugt 1 bis 3

bedeuten.

Beispiele für ungesättigte N-gruppenhaltige Monomere sind N-Dialkyl- oder N-Monoalkyl-aminoalkyl-(meth)acrylate wie beispielsweise N-Diethyl-aminoethylmethacrylat oder N-tert-Butylaminoethylacrylat oder die entsprechenden N-Alkanol-Verbindungen,N-Dialkyl- oder N-Monoalkylaminoalkyl(meth)acrylamid wie beispielsweise N-Dimethyl-aminoethanolacrylamid oder die entsprechenden N-Alkanol-Verbindungen und/oder Vinylgruppen enthaltende heterocyclische Verbindungen mit einem oder mehreren basischen Stickstoffatomen wie beispielsweise N-Vinylimidazol.

Unter radikalisch polymerisierbaren hydroxylgruppenhaltigen Monomeren werden solche verstanden, die neben einer polymerisierbaren ethylenisch ungesättigten Gruppe noch mindestens eine Hydroxylgruppe an einem C2 bis C20 linearen, verzweigten oder cyclischen Kohlenstoffgerüst enthalten. Es sind hauptsächlich ungesättigte Veresterungsprodukte der allgemeinen Formel

$R\text{-}CH=CR'\text{-}X\text{-}_B$

worin

R,R' und X die auf Seite 18 angegebenen Bedeutungen haben

und $\beta$ eine lineare oder verzweigte $C_{1-6}$Alkylgruppe mit 1 bis 3 OH-Gruppen ist.

Besonders geeignet sind (Meth)acrylsäure-hydroxyalkylester wie beispielsweise 2-Hydroxyethylacrylat, 2-Hydroxypropylmethacrylat, Butandiol-1.4-monoacrylat, 2.3-Dihydroxypropylmethacrylat, Pentaerythrit-monomethacrylat, Polypropylenglykol-monoacrylat oder auch Fumarsäuredihydroxyalkylester. Es können jedoch auch N-Hydroxyalkyl(meth)acrylamide oder N-Hydroxyalkylfumarsäure-mono-oder -diamide wie beispielsweise N-Hydroxyethyl-acrylamid oder N-(2-Hydroxypropyl)-methacrylamid eingesetzt werden. Besonders elastische Eigenschaften sind beim Einsatz eines Reaktionsproduktes von Hydroxyalkyl-(meth)acrylat mit ε-Caprolacton zu erhalten. Andere hydroxylgruppenhaltige Verbindungen sind Allylalkohol, Monovinylether von Polyalkoholen, besonders Diolen wie der Monovinylether des Ethylenglykols oder Butandiols, sowie hydroxylgruppenhaltige Allylether oder -ester wie 2.3-Dihydroxypropylmonoallylether, Trimethylolpropanmonoallylether oder 2.3-Dihydroxypropansäureallylester. Besonders geeignet sind Hydroxyethyl-, Hydroxypropyl- und/oder Butandiol-1.4-(meth)acrylat.

Unter ethylenisch polyungesättigten Monomeren werden Verbindungen mit mindestens 2 radikalisch polymerisierbaren Doppelbindungen nach der allgemeinen Formel

$$R\text{-}CH = CR'\text{-}D\text{-}(\text{-}CR' = CH\text{-}R)_m,$$

worin m = 1 bis 3, bevorzugt m = 1 ist verstanden, wobei außer den auf Seite 18 angegebenen Bedeutungen D das allgemeine tragende chemische Grundgerüst für die reaktive Doppelbindung ist. Beispiele für D sind der o-, m- oder p-Phenylrest oder Reste der Formel -X-Alkyl-X'-, worin Alkyl bevorzugt 2 bis 18 C-Atome aufweisen, X und X' gleiche oder verschiedene verbindende Gruppen, z.B. -O-, -CONH-, -COO-, -NHCOO- oder -NH-CO-NH-sind. B kann zum Beispiel ein Benzolring wie im Divinylbenzol sein, der gegebenenfalls auch substituiert sein kann wie p-Methyldivinylbenzol oder o-Nonyldivinylbenzol. Weitere Beispiele für geeignete polyungesättigte Monomere sind Reaktionsprodukte aus Polyalkoholen, besonders Dialkoholen, mit α,β-ungesättigten Carbonsäuren, wie sie schon definiert sind. Beispiele hierfür sind Ethandioldiacrylat, Glykol- dimethacrylat, 1.4-Butandiol-diacrylat, 1.6-Hexandiol-diacrylat, Neopentylglykoldimethacrylat, Triethylenglykol-dimethacrylat, Polyglykol-400-diacrylat, Glycerin- dimethacrylat, Trimethylolpropan-triacrylat und/oder Pentaerythrit-diacrylat. Urethan- und amidgruppenhaltige polyfunktionelle Monomere werden hergestellt durch Reaktion von beispielsweise Hexandiisocyanat oder Methacrylsäure-β-isocyanato-ethylester mit Hydroxyethyl(meth)acrylat oder (Meth)acrylsäure. Beispiele für anders aufgebaute geeignete Verbindungen sind Allylmethacrylat, Diallylphthalat, Butandioldivinylether, Divinylethylenharnstoff, Divinylpropylenharnstoff, Maleinsäurediallylester, Bis-maleinimide, Glyoxabisacrylamid und/oder das Reaktionsprodukt von Epoxidharz mit (Meth)acrylsäure oder Fumarsäure-halbestern. Bevorzugt wird der Einsatz von difunktionellen ungesättigten Monomeren wie Butandiol-diacrylat oder Hexandiol-diacrylat. Bei Verwendung von Glycidyl-methacrylat und Methacrylsäure entsteht das entsprechende Glycerin-dimethacrylat automatisch bei der Polymerisation. Die Art und Menge an polyungesättigten Monomeren ist mit den Reaktionsbedingungen (Katalysatoren, Reaktionstemperatur) sorgfältig abzustimmen, um die gewünschte hohe Viskosität ohne Gelierungen zu erhalten. Es wird der vollständige Einbau der polyungesättigten Monomeren bevorzugt, d.h. das einpolymerisierte Produkt enthält praktisch keine Doppelbindungen mehr.

Die Auswahl der radikalisch polymerisierbaren Monomeren, die außer der ethylenisch ungesättigten Bindung keine weiteren reaktiven Gruppen enthalten, erfolgt nach den mechanischen Eigenschaften des Films und der Verträglichkeit der dabei eingesetzten Harzkombination. Es werden Acrylsäure- alkylester, Methacrylsäure-alkylester, Maleinsäure- und/oder Fumarsäure-dialkylester eingesetzt, wobei die Alkylreste aus 1 bis 20 Kohlenstoffatomen bestehen und in linearer oder verzweiger aliphatischer Kette und/oder als cycloaliphatischer und/oder (alkyl)aromatischer Rest angeordnet sind. "Harte" Monomere mit einer hohen Glasübergangstemperatur als Polymere sind beispielsweise Monomere vom Vinylaromatentyp wie Styrol, α-substituierte Styrole wie α-Methylstyrol, o-, m-und p-Alkylstyrole wie Vintyltoluol oder p-tert.-Butylstyrol, halogenierte Vinylbenzole wie o- oder p-Chlorstyrol, Methacrylsäureester mit kurzer Kette wie Methylmethacrylat, Ethylmethacrylat, Propylmethacrylat, Butylmethacrylat, Cyclohexylmethacrylat, Isobornylmethacrylat, Dihydrodicyclopentadienyl-methacrylat, (Meth)acrylamid und/oder auch (Meth)acrylnitril. "Weiche" Monomere sind dagegen Acrylsäureester mit einer langen Alkoholkette wie n-Butylacrylat, Isobutylacrylat, tert.-Butylacrylat , 2-Ethylhexylacrylat und/oder Laurylacrylat. Es können auch ungesättigte Ether wie Ethoxyethylmethacrylat oder Tetrahydrofurfurylacrylat eingesetzt werden. Monomere vom Vinylestertyp, vorzugsweise Vinylester α-verzeigter Monocarbonsäuren wie dem Versaticsäure-vinylester,
können auch einpolymerisiert werden, wenn geeignete Reaktionsbedingungen und Reaktionscomonomere ausgewählt werden.

Die Copolymerisation erfolgt in bekannter Weise durch Lösungspolymerisation unter Zusatz von radikalischen Initiatoren, sowie gegebenenfalls Molekulargewichtsreglern bei Temperaturen von 50 bis 180 °C. Sie erfolgt in einer Flüssigkeit, in der sich Monomere und Polymere gemeinsam lösen. Der Gehalt an Monomeren, bzw. Polymeren nach der Auspolymerisation beträgt dabei etwa 50 bis 90 Gew.-% . Es

wird eine Lösungspolymerisation in organischen Lösemittel bevorzugt, die mit Wasser verdünnbar sind. Solche Lösemittel sind beispielsweise Ethylenglykol, Methoxyethanol, Butoxyethanol, Diethylenglykol, Triethylenglykol, Diethylenglykol-dimethylether, Propylenglykol, Methoxypropanol, Ethoxypropanol, Dipropylenglykol-monomethylether, Dipropylenglykol-dimethylether, Diacetonalkohol, Ethanol, Isopropanol, sek. Butanol, tert. Butanol, Aceton, Methoxypropanon, Dioxan, Tetrahydrofuran, N-Methylpyrrolidon oder ihren Gemischen.

Im allgemeinen wird das Lösemittel bzw. Lösemittelgemisch bis zur Reaktionstemperatur erwärmt und dann das Monomerengemisch über mehrere Stunden zulaufen gelassen. Um bei Rückflußtemperatur arbeiten zu können, wird der Initiator auf die Siedetemperatur des Lösemittelgemisches abgestimmt. Er zerfällt dabei üblicherweise mit einer Halbwertzeit von 30 Minuten bis zu 10 Stunden. Der Initiator wird entweder im Monomerengemisch kalt gelöst oder aus Sicherheitsgründen während des Zulaufs der Monomeren getrennt zudosiert. Als Katalysatoren, die in organischen Lösemitteln löslich sind, werden 0,1 bis 5 Gew.-%, bevorzugt 0,5 bis 3 Gew.-%, bezogen auf die eingesetzte Monomeren-Menge an Peroxiden und/oder Azo-Verbindungen zugesetzt. Als Peroxide werden beispielsweise verwendet Benzoylperoxid der Di-tert.-butylperoxid, Hydroperoxide wie tert.-Butylhydroperoxid oder Cumolhydroperoxid und Perester wie tert.-Butylperoctoat oder tert.-Butylperbenzoat. Thermisch zerfallende Azo-Verbindungen sind beispielsweise 2.2′-Azo-bis-(2-cyanopropan) oder 1.1′-Azo-bis-cyclohexancarbonitril. Als Initiatoren können auch radikalbildende Verbindungen von Dibenzyltyp verwendet werden, wie 1.2-Bis(4-methylphenyl)-1.2-dicarbethoxy-1.2-dicyanoethan. Durch den Einsatz von Reglern kann die Molmasse in bekannter Weise herabgesetzt werden. Bevorzugt werden hierzu Mercaptane, halogenhaltige Verbindungen und andere radikalübertragende Substanzen eingesetzt. Besonders bevorzugt sind n-oder tert.-Dodecylmercaptan, Tetrakis-mercaptoacetylpentaerythrit, tert.-Butyl-o-thiokresol, Thiosalicylsäure, Buten-1-ol oder dimeres $\alpha$-Methylstyrol.

Die Herstellung von Amino(meth)acrylatharzen kann auch durch polymeranaloge Umsetzung geschehen. So kann man beispielsweise ein Acrylamidgruppen enthaltendes Copolymeres mit Formaldehyd und einem sekundären Amin und/oder Aminoalkohol umsetzen. Ein besonders bevorzugtes Verfahren wird in der DE-A-34 36 346 beschrieben. Hier werden zunächst epoxidgruppenhaltige monoethylenisch ungesättigte Monomere in das Copolymere einpolymerisiert. Danach wird mit überschüssige primären und/oder sekundären Monoaminen und/oder Monoaminoalkoholen umgesetzt und anschließend der Aminüberschuß abdestilliert.

Epoxidgruppen enthaltende radikalisch polymerisierbare Monomere sind Mono- und/oder Diglycidylverbindungen von $\alpha,\beta$-ungesättigten Säuren, Säureamiden, Alkoholen oder Aminen wie beispielsweise Glycidylester, $\beta$-Methylglycidylester der (Meth)acrylsäure, der Fumarsäure und/oder Maleinsäure, der Fumarsäure- und/oder Maleinsäuremonoalkylester, sowie Glycidylverbindungen von (Meth)acrylsäureamid, Fumarsäurediamid, Maleinsäurediamid oder Maleinimid und/oder Glycidylether von ungesättigten Alkoholen wie Vinyl- und/oder Allylalkohol. Andere geeignete Verbindungen sind Monoglycidylester von Dicarbonsäuremonoestern mit ungesättigten Alkoholen wie Phthalsäure-allyl-glycidylester. Es können jedoch auch Vinyl- und Allylester von epoxidierten Fettsäuren eingesetzt werden wie 2.3-Epoxy-buttersäure-allylester oder Epoxystearinsäure-allylester. Außerdem eignen sich auch Diolefine, deren eine Doppelbindung epoxidiert worden ist, wie Vinyl-ethylenoxd, 1-Methyl-1-vinylethylenoxid oder 3.4-Epoxy-1-vinyl-cyclohexan. Glycidylacrylat und Glycidylmethacrylat werden für die Copolymerisation bevorzugt. Der Anteil von Epoxidgruppen enthaltenden ungesättigten Monomeren im Copolymerisat beträgt im allgemeinen 8 bis 50 Gew.-%. Die untere Grenze liegt bevorzugt bei 12 Gew.-%, die obere Grenze bei 35 Gew.-%. Die Polymerisation muß vollständig abgelaufen sein, bevor die Umsetzung mit Aminen stattfindet, weil sonst reversible Nebenraktionen an den aktivierten Doppelbindungen der Monomeren mit den sekundären Aminen auftreten.

Als sekundäre Amine für die Umsetzung mit den Epoxidgruppen sind besonders zweckmäßig sekundäre Amine der Formel

R-NH-R′

wobei

R = -H oder -R′

R′ = $-C_nH_{2n+1}$, $-C_nH_{2n}OH$ und/oder $-C_nH_{2n}-N=CR_2$ und

n = 1 bis 8, bevorzugt 1 bis 2 betragen.

Folgende Amine können beispielsweise für die Reaktion eingesetzt werden: $C_1$ bis $C_6$-Dialkylamine mit gleichen oder verschiedenen Alkylgruppen im Molekül wie Dimethyl-, Diethyl-, Diisopropyl-, Dibutyl-, Methylethyl-, Methylpropyl-, Methylbutylamin, monocycloaliphatische Amine wie Morpholin, Piperidin, Pyrrolidin, Oxazolidin und/oder Monoalkanolamine wie N-Methylaminoethanol und/oder Dialkanolamine wie Diethanolamin, Diisopropanolamin. Beispiele für primäre Amine oder Aminoalkohole sind $C_1$ bis $C_8$-Alkylamine wie Ethylamin, 2-Ethylhexylamin oder Aminoethanol. In jedem Fall sind $C_1$ bis $C_4$-Alkylgruppen, insbesondere $C_1$ und/oder $C_2$-Alkylgruppen bevorzugt. Besonders bevorzugt sind sekundäre Amine wie Dimethylamin, Diethylamin, Methylethylamin oder N-Methyl-aminoethanol, weil damit gut lösliche ET-Bäder mit hohem pH-Wert erhalten werden können. Die oben erwähnten primären Amine werden meistens im Gemisch mit sekundären Aminen eingesetzt, weil sonst zu hochviskose Produkte entstehen.

Eine ähnliche Umsetzung kann beispielsweise bevorzugt in äquivalenten Mengen mit Ketiminen von Polyaminen erfolgen, die eine sekundäre Aminogruppe und eine oder mehrere primäre Aminogruppen enthalten wie beispielsweise das Monoketimin aus Methylisobutylketon und Methylaminopropylamin oder das Diketimin aus Methylisobutylketon und Diethylentriamin.

Die Zahl der primären und/oder sekundären Hydroxylgruppen wird so optimiert, daß beim Einbrennen des Lackes ein gut vernetzter, lösemittelbeständiger Film entsteht. Berücksichtigt man, daß beim Umsetzen mit Amin aus jeder Epoxidgruppe eine sekundäre OH-Gruppe entsteht, so ist es angebracht, mindestens eine weitere Hydroxylgruppe pro Molekül, bevorzugt primäre Hydroxylgruppe über andere ungesättigte Monomere einzupolymerisieren. Die Zahl der Epoxidgruppen bestimmt die Zahl der damit zur Umsetzung kommenden Aminogruppen und damit auch die Löslichkeit des Produktes. Es soll mindestens eine Epoxidgruppe pro Molekül vorhanden sein. Oft ist es vorteilhaft, eine erhöhte Hydroxylzahl mit einer niedrigen Aminzahl zu kombinieren. Das Entwicklungsziel ist im allgemeinen ein gut lösliches Produkt bei niedrigem Neutralisationsgrad und möglichst hohem pH-Wert.

Die vorstehend beschriebenen Fremdvernetzenden, Epoxidgruppen freien Amino-poly(meth)acrylatharze werden erfindungsgemäß in den Bindemitteln für die kathodische Abscheidung in ET-Bädern (KTL-Bädern) eingesetzt. Sie können außer den Aminoepoxidharzen als Komponente A) und den Amino(meth)-acrylatharzen als Komponente B) noch die nachfolgende Komponente C) als Vernetzungsmittel enthalten. Außerdem können sie übliche Zusatzstoffe enthalten, wie sie beispielsweise in den eingangs genannten, KTL-betreffenden Literaturstellen beschrieben und teilweise nachfolgend genauer erläutert werden.

Beispiele für die Komponente C) sind Formaldehyd-Kondensationsharze (Harnstoff-, Melamin-, Benzoguanin- oder Phenol-Formaldehydharze), blockierte Polyisocyanate, Harze mit umesterungsfähigen Estergruppen und/oder Harze mit aktivierten Doppelbindungen. Die Komponente C) kann gegebenenfalls unter Zusatz von üblichen Katalysatoren enthalten sein.

Blockierte Polyisocyanate werden dadurch hergestellt, daß man ein multifunktionelles Isocyanat mindestens mit einer stöchiometrischen Menge an einer monofunktionellen, aktiven Wasserstoff (Zerewitinoff-Reaktion) enthaltenden Verbindung umsetzt, wobei gegebenenfalls basische Katalysatoren wie tert. Amine oder geringe Mengen an Zinnsalzen wie Dibutylzinndilaurat zugegeben werden können. Die Isocyanatgruppe wird auf diese Weise bei Raumtemperatur gegen Reaktionen mit Wasser oder Alkoholen geschützt. Das erhaltene Reaktionsprodukt setzt sich beim Erwärmen mit den Hydroxylgruppen des Amino-poly(meth)-acrylatharzes um, wobei die Schutzgruppe wieder abgespalten wird. Sie spaltet sich bei Einbrenntemperaturen von weniger als 210 °C, vorzugsweise weniger als 190 °C, besonders unter 180 °C, andererseits über 110 °C, vorzugsweise über 140 °C, besonders bevorzugt über 150 °C, wieder ab, damit die freiwerdende Isocyanatgruppe mit dem Basisharz reagieren kann. Mittel, die die Isocyanate blockieren, enthalten nur eine einzige Amin-, Amid-, Lactam-, Thio- oder Hydroxylgruppe. So haben sich beispielsweise bewährt aliphatische oder cycloaliphatische Alkohole wird 2-Ethylhexanol, Dialkylaminoalkohol wie Dimethylaminoethanol, Oxime wie Methylethylketoxim, Lactame wie $\epsilon$-Caprolactam oder Pyrrolidon-2, Imide wie Phthalimid oder N-Hydroxy-maleinimid, Hydroxylalkylester, Malonsäure- oder Acetessigsäureester. Es werden aber auch $\beta$-Hydroxyglykole oder - glykolether und Glykolamide empfohlen.

Als typische multifunktionelle Isocyanate eignen sich aliphatische, cycloaliphatische und/oder aromatische Polyisocyanate mit mindestens zwei Isocyanatgruppen pro Molekül. Als aromatische Diisocyanate eignen sich die Isomeren oder Isomerengemische von Phenylendiisocyanat, Toluylendiisocyanat, Xylylendiisocyanat, Biphenylendiisocyanat, Naphthylendiisocyanat und Diphenylmethan-diisocyanat, Diphenyltetraisocyanat, Naphthyltetraisocyanat. Aufgrund ihrer guten Beständigkeit gegenüber ultraviolettem Licht ergeben (cyclo)aliphatische Diisocyanate Produkte mit geringer Vergilbungsneigung. Beispiele hierfür sind Isophorondiisocyanat, Cyclopentylendiisocyanat, sowie die Hydrierungsprodukte der aromatischen Diisocyanate wie Cyclohexylendiisocyanat, Methylcyclohexylendiisocyanat und Dicyclohexylmethan-diisocyanat. Aliphatische Diisocyanate sind Verbindungen der Formel

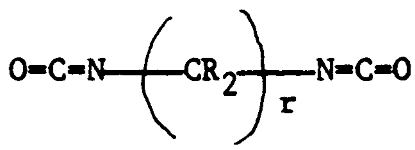

worin r eine ganze Zahl von 2 bis 20, insbesondere 6 bis 8 ist und R, das gleich oder verschieden sein kann, Wasserstoff oder einen niedrigen Alkylrest mit 1 bis 8 C-Atomen , vorzugsweise 1 oder 2 C-Atomen darstellt.

Beispiele hierfür sind Trimethylendiisocyanat, Tetramethylendiisocyanat, Pentamethylendiisocyanat, Hexamethylendiisocyanat, Propylendiisocyanat, Ethylethylendiisocyanat, Dimethylethylendiisocyanat, Methyltrimethylendiisocyanat und Trimethylhexandiisocyanat. Besonders bevorzugt werden als Diisocyanate Isophorondiisocyanat und Dicyclohexylmethan-diisocyanat.

Vinylpolymerisate, die Isocyanatgruppen enthalten und durch Copolymerisation von z.B. Cyanatoethyl-(meth)acrylat oder Dimethyl-isopropylbenzylisocyanat mit noch Alkyl(meth)acrylaten und/oder (Alkyl)-vinylbenzolen entstehen, können auch verwendet werden.

Gemischt aliphatisch/aromatische Isocyanat-Verbindungen sind auch geeignet.

Als Triisocyanate haben sich Produkte bewährt, die durch Trimerisation oder Oligomerisation von Diisocyanaten oder durch Reaktion von Diisocyanaten mit polyfunktionellen OH- oder NH-Gruppen enthaltenden Verbindungen entstehen. Hierzu gehören beispielsweise die schon bei der Komponente B) beschriebenen Handelsprodukte. Falls notwendig, kann die mittlere Funktionalität gegebenenfalls durch Zusatz von Monoisocyanaten gesenkt werden. Beispiele für solche kettenabbrechenden Monoisocyanate sind Phenylisocyanat, Cyclohexylisocyanat und Stearylisocyanat.

Eine Molekülvergrößerung kann auch durch Reaktion mit tert. Aminogruppen enthaltenden Polyalkoholen wie N-Methyl-diethanolamin, Triethanolamin oder tertiäre Aminogruppen enthaltenden Polyaminen wie 3-(Methyl)-3-(2-Aminoethyl)-aminopropylamin erfolgen. Um die Löslichkeit zu verbessern, können außerdem kettenabbrechende N-Dialkyl-aminoalkohole wie Dimethyl-aminoethanl oder N,N-Dialkyl-alkylendiamine wie Dimethylaminopropylamin oder N,N-Diethyl-N′-Methyl-1.3-ethandiamin eingesetzt werden. Isocyanathaltige Präpolymere auf Basis von Polyglykolethern, Polyesterpolyolen, Polyetherpolyolen, Polycaprolactonpolyolen und/oder Polycaprolactampolyolen können ebenfalls mit Vorteil eingesetzt werden. Für nicht-vergilbende Einschichtlacke werden aliphatische und cycloaliphatische Polyisocyanate bevorzugt.

Ein anderer geeigneter Typ Vernetzungsmittel (Komponente C) ist ein Harz mit endständigen oder seitenständigen, veresterten Carboxylgruppen, die im neutralen, wäßrigen Medium weitgehend stabil/sind, jedoch im basischen Medium des abgeschiedenen Films bei Temperaturen über etwa 140 °C mit einem oder mehreren hydroxylgruppenhaltigen Harzen (Komponenten A) and B) ) reagieren. Hierbei estern die umesterungsfähigen Estergruppen mit den Hydroxylgruppen der Komponenten A) und B) unter Abspalten der leichter flüchtigen "alkoholischen Schutzgruppen" um. Es sollen im wesentlichen alle endständigen oder seitenständigen Carboxylgruppen mit Alkoholen verestert sein, die unter den Einbrennbedingungen flüchtig sind. Um ein Wandern des Polyesters zur Anode zu vermeiden, ist darauf zu achten, daß er eine Säurezahl unter 20, bevorzugt unter 10, besonders bevorzugt unter 3 hat.

Die Reaktivität der Ester wird durch geeigneten chemischen Aufbau gesteigert, z.B. durch Erhöhen der elektrophilen Aktivität der Carboxylgruppe oder durch einen negativen induktiven Effekt auf die Alkoholgruppe. Zur Umesterung befähigt sind Ester von primären, sekundären und tertiären Carboxylgruppen. Aufgrund ihrer höheren Reaktivität werden Ester von primären Carboxylgruppen bevorzugt.

Die Umesterung wird unterstützt durch die Flüchtigkeit von niederen linearen oder verzweigten primären Monoalkoholen oder durch 1.2-Glykole, die gegebenenfalls durch Ether- oder Estergruppen substituiert sind. Je niedrigermolekular die Alkohole sind, die bei der Umesterung abgespalten werden, desto niedriger sind die Spaltverluste. Methanol oder Ethanol werden besonders bevorzugt. In der Literatur werden eine Reihe von estergruppenhaltigen Vernetzungsmitteln beschrieben, die zur Umesterung mit OH-Gruppen und/oder Umamidierung mit $NH_2$-Gruppen eingesetzt werden, z.B. in der EP-A-0 04 090, der EP-A-0 12 463, DE-A-31 03 642, der EP-A-0 82 291, DE-A-33 766 und DE-A-34 36 345.

Vernetzungsmittel (Komponente C) mit aktivierten Doppelbindungen, die entweder alt ungesättigten Doppelbindungen der Komponente A) oder den Hydroxylgruppen, primären oder sekundären Aminogruppen der Komponente A) und/oder B) reagieren können, werden in den US-PS 3 921 181, US-PS 3 975 251, sowie den nicht vorveröffentlichten Patentanmeldungen DE-OS 36 15 810.0 und DE-OS 35 30 179.1 beschrieben. Es sind Polymerisations-, Polykondensations- und/oder Polyadditionsharze, die im Mittel mindestens zwei end- oder seitenständige ethylenische Doppelbindungen pro Molekül enthalten. Die von den Doppelbindungen ausgehende Reaktion soll so schnell ablaufen, daß eine ausreichende Vernetzung bei

Einbrenntemperaturen von 140 bis 160 °C oder niedriger erreicht wird. Besonders gut eignen sich hierfür Doppelbindungen von Acryl- und/oder Methacrylgruppen. Die Reaktion kann durch Auswahl von geeigneten Sikkativen von Schwermetallen mit organischen Monocarbonsäuren gegebenenfalls unter Zusatz von Komplexbildnern wie Phenanthrolein in bekannter Weise beschleunigt werden.

Als Komponente C) können geeignete niedrigmolekulare Acrylsäureverbindungen verwendet werden, wie Ethylenglykoldiacrylat, 1,3-Butylenglykoldiacrylat, Bisphenol-A-diacrylat, Diethylenglykol-diacrylat, Triethylenglykoldiacrylat, Tetraethylenglykoldiacrylat, 1,6-Hexandioldiacrylat, Polyethylenglykoldiacrylat, Trimethylolpropandiacrylat, Trimethylolpropantriacrylat, Pentaerythritdiacrylat, Pentaerythrittriacrylat, Pentaerythrittetraacrylat und Melamin acrylat sowie die entsprechenden Methacrylsäureverbindungen.

Höhermolekulare ungesättigte Polymerisationsharze können dadurch hergestellt werden, daß ein Copolymerisat mit solchen funktionellen Gruppen hergestellt wird, die anschließend in einem zweiten Reaktionsschritt zur Einführung von Verbindungen mit ungesättigten Doppelbindungen geeignet sind. So lassen sich amid- oder carboxylgruppenhaltige Polymerisatharze mit Glycidylacrylat oder Glycidylmethacrylat umsetzen. Hierbei muß durch die Wahl der Reaktionstemperatur darauf geachtet werden, daß die entstehenden $\beta$-Hydroxyester oder-amide nicht während des Einbrennens durch Umesterung abspalten. Andere Möglichkeiten bestehen in der Umsetzung von Glycidyl(meth)acrylat - Copolymeren mit Acrylsäure oder Methacrylsäure oder der von hydroxylgruppenhaltigen Poly(meth)acrylatharzen mit methylolierten (Meth)acrylamiden, die auch mit niedrigen Alkoholen verethert sein können.

Die Komponente C) kann auch durch Reaktion von Diisocyanaten oder Polyisocyanaten, Isocyanatgruppen tragenden Präpolymeren, Präkondensaten und Kunstharzen mit Hydroxyalkyl(meth)acrylat, z.B. durch Reaktion des Reaktionsproduktes aus 1 Mol Trimethylolpropan und 3 Mol Toluylendiisocyanat mit 3 Mol 2-Hydroxyethylacrylat, hergestellt werden. Besonders bevorzugt wird die Herstellung von Isocyanatgruppen enthaltenden höhermolekularen Polyurethan-und/oder Polyharnstoffharzen, die anschließend in zweiter Reaktionsstufe mit Hydroxyethyl oder Hydroxypropyl-(meth)acrylat umgesetzt werden.

Die Vernetzungsmittel können gegebenenfalls tertiäre Aminogruppen enthalten, damit eine bessere Dispergierung in Wasser erreicht wird. Die Menge an tertiären Aminogruppen muß in solchen Fällen so groß oder so klein sein, daß die gemeinsame elektrophoretische Abscheidung mit den Komponenten A) und B) gewährleistet ist.

Es ist natürlich auch möglich, Doppelbindungen enthaltende Gruppen, z.B. die Acrylgruppe, direkt in das Kunstharzmolekül der Komponente A) einzuführen, wodurch in gewissem Umfang selbsthärtende CED-Bindemittel entstehen. Vorteilhaft ist es jedoch, die Komponente C) als reaktive Verdünnerkomponente dem System zuzumischen, wodurch CED-Beschichtungen mit höherer Schichtdicke (30 bis 50 µm) und hervorragendem Umgriff (throwing power) erhalten werden.

Für eine Vernetzung bei der möglichst wenig Spaltprodukte entstehen, ist es zweckmäßig, daß die Komponente C) pro Molekül im Mittel weniger als eine endständige, beim Einbrennen umesterungsfähige Estergruppe, bevorzugt weniger als 0,5, besonders bevorzugt im wesentlichen keine endständigen, beim Einbrennen umesterungsfähigen Estergruppen oder blockierte Isocyanatgruppen enthält. Unter dem Begriff "im wesentlichen" wird verstanden, daß praktisch alle derartigen Gruppen nicht vorliegen, wobei jedoch bei hochmolekularen Produkten der vorliegenden Art es immer möglich ist, daß ein sehr geringer Gehalt an solchen Gruppen vorliegt.

Bei Anwesenheit primärer und sekundärer Aminogruppen im Bindemittel ist darauf zu achten, daß nur solche end-oder seitenständigen Doppelbindungen im System vorhanden sind, die zwar im Sinne der Erfindung reaktiv sind, d.h. während des Einbrennens vernetzen, wie z.B. Doppelbindungen gemäß der Formel

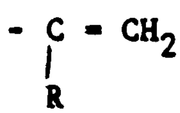

wobei R = $C_nH_{2n+1}$ ,

die jedoch gegenüber primären und sekundären Aminen nicht besonders aktiviert sind.

Wie gemäß dem Stand der Technik werden auf 50 bis 95 Gew.-% der Komponenten A) und B) 50 bis 5 Gew.-% Vernetzungsmittel (Komponente C) ) eingesetzt, wobei als Vernetzungsmittel auch aus dem Stand der Technik bekannte Produkte eingesetzt werden können. Die KTL-Bäder können gegebenenfalls zusätzlich bis zu 30 Gew.-% hydroxyfunktionelle Harze einemulgiert enthalten, die mit den Vernetzungsmitteln reaktionsfähig sind (vgl. z.B. EP-A-0 04 090).

Das Mischungsverhältnis der Komponenten (A + B) und C) liegt bevorzugt zwischen 90 zu 10 und 60

zu 40 und wird empirisch aus den optimal erreichbaren anwendungstechnischen Eigenschaften bei der gegebenen Einbrenntemperatur bestimmt. Eine Kombination mehrerer Vernetzungssysteme kann in bestimmten Fällen von Vorteil sein.

Die Vernetzung der OH-gruppenhaltigen Komponenten A) und B) mit blockierten Polyisocyanaten kann gegebenenfalls durch Zusatz von 0,01 bis 2 Gew.-%, speziell 0,5 bis 1 Gew.%, bezogen auf Festharz der Komponenten A) und B), stark basische tertiäre Amine und/oder aktive Metallverbindungen beschleunigt werden. Eine besondere, manchmal synergistische Wirkung wird erreicht durch die Kombination von basischem Medium des abgeschiedenen OH-Gruppen haltigen Harz es und den Metallsalzen von Wismut, Blei, Cobalt, Eisen Antimon und/oder Zinn-II- und -IV. Besonders bevorzugt werden Katalysatoren wie Eisen-III-acetylacetonat, Dibutylzinn-dilaurat, Tri-n-butyl-zinn-oxid, Dibutyl-zinn-dioctylmaleat, Zinn-octoat, Zinn-oleat, Tetrabutyltitanat und/oder Cobalt-2-ethylhexoat.

Zur Katalyse des Umesterungsverfahrens ist im allgemeinen ein höherer Katalysatorgehalt notwendig.Zweckmäßig werden 0,1 bis 10 Gew.-%, bevorzugt 2 bis 6 Gew.-%, bezogen auf die Komponenten A) und B), Metalloxide, Metallsalze oder Metallkomplexe von ein- oder mehrwertigen Metallen verwendet. Sie werden im allgemeinen nach Salzbildung mit 2-Ethylhexansäure oder Naphthensäure in aliphatischen und aromatischen Kohlenwasserstoffen gelöst. Diese Lösungen werden in das Elektrophoresebad einemulgiert. Eine andere Möglichkeit besteht in der Komplexbildung der Metalle mit Acetylacetonat, Dicyclopentadien, 8-Oxy-hydrochinolin, 4-Methylcatechin und/oder 2,5-Dimercapto-1,3,4-thiodiazol.

Beispiele für geeignete Katalysatoren sind Antimontrioxid, Cobaltnaphthenat, Bleioctoat, Eisen-acetylacetonat, das Reaktionsprodukt aus Zinkoxid + 8-Oxyhydrochinolin, Thalliumdicyclopentadien oder Triethanolamin-titanat. Bevorzugt werden Bleioctoat und das Zink-Oxyhydrochinolat. Die Metallkatalysatoren können auch in fein verteilter Form als Pigmente wie Bleisililat eindispergiert werden. Wasser-ver dünnbare Metallsalze sind ebenfalls als Umesterungskatalysatoren geeignet, wenn das Metall als Verbindung oder Komplex in fein verteilter Form mit dem Lack abgeschieden wird. Bevorzugt sind Katalysatoren, die im ET-Bad schlecht löslich sind und sich nach der elektrophoretischen Abscheidung im abgeschiedenen Film beim Einbrennen gleichmäßig verteilen.

Die Komponenten A),B) und C) können kalt gemischt werden. Die Komponente C) kann mit A) und/oder B) auch bei erhöhter Temperatur präkondensiert werden. Dabei reagieren die Komponenten A) oder B) und C) in gewissem Umfang miteinander, ohne daß das Gemisch seine Hitzehärtbarkeit und die Eigenschaft, durch Protonisieren mit Säure wasserlöslich gemacht werden zu können, verliert.

Zum Ausbalancieren der anwendungstechnischen Eigenschaften ist es zweckmäßig, daß das an der Kathode abscheidbare Harz außer dem Vernetzungsmittel noch zusätzlich bis zu 30Gew.%, bevorzugt 5 bis 20 Gew.-% eines hydroxyfunktionellen Harzes enthält, das mit den blockierten Polyisocyanaten und den umesterungsfähigen Vernetzungsmitteln reagiert. So können zum Steigern des Umgriffs hydroxyfunktionelle Harze mit einer OH-Zahl von 30 bis 500, speziell 50 bis 300 und einer mittleren Molmasse ($\overline{M}n$)von 300 bis 5000, speziell 500 bis 3000 eingesetzt werden. Beispiele für solche Harze sind Styrol-Allylalkohol-Copolymere, OH-gruppenhaltige (Meth)acrylcopolymere, Caprolactonpolyole, Caprolactampolyole, Urethanpolyole, OH-gruppenhaltige Polyether und Polyester.

Die Harze enthalten eine solche Menge an polaren Gruppen, bevorzugt primären OH-Gruppen, daß sie einwandfrei in dem neutralisierten, basischen Harzgemisch (Komponenten A) und B) ) einemulgiert sind. Zum Erreichen einer besseren Verträglichkeit und Wasserverdünnbarkeit ist der Einbau einer geringen Aminzahl unter 30, besonders unter 20, möglich.

Der Molmassenbereich wird so ausgewählt, daß sie nicht mehr flüchtig sind, jedoch durch eine verbesserte Fließfähigkeit eine gute Filmbildung erzielen. Eine eventuell erfolgende Präkondensation kann in beliebiger Reihenfolge erfolgen.

Durch Protonisieren mit Säuren wird das kationische Bindemittelgemisch in an sich bekannter Weise wasserverdünnbar gemacht. Beispiele für Säuren sind Ameisensäure, Milchsäure, Essigsäure, Propionsäure, Zitronensäure, Malonsäure, Acrylsäure, Phosphorsäure oder Alkylphosphorsäure. Monobasische niedrigmolekulare organische Carbonsäuren werden bevorzugt. Es muß mindestens so viel Säure zugegeben werden, daß eine stabile Emulgierung des kationischen Basisharzes erfolgt. Ein Überschuß an Säure, d.h. ein Neutralisationsgrad über 100%, ist zweckmäßig zu vermeiden. Der MEQ-Wert (Milliäquvalente Säure pro 100 g Festharz) liegt im allgemeinen zwischen 20 und 80. Es wird ein möglichst niedriger MEQ-Wert angestrebt, um ein möglichst hohes Abscheideäquivalent zu erhalten.

Das Überzugsmittel kann zum Senken der Viskosität , zum Steuern der Abscheidespannung und zum Verbessern der Haftung und des Verlaufs bis zu ungefähr 20 Gew.-% organische Lösemittel enthalten. Es wird ein möglichst niedriger Gehalt an organischen Lösemitteln angestrebt, besonders unter 15 Gew.-%, ganz besonders unter 10 Gew.-%. Als Lösemittel dienen Alkohole, Glykolether, Ketoalkohole, gegebenenfalls unter Zusatz von aliphatischen und/oder aromatischen Kohlenwasserstoffen verschiedener Kettenlänge.

Bei der Auswahl muß berücksichtigt werden, daß das Vernetzungsmittel nicht wasserlöslich ist und Anteile von wasserunlöslichen Lösemitteln gegebenenfalls den Dispergiervorgang erleichtern und Stabilisieren können. Mit steigendem Lösemittelgehalt verschlechtert sich der Umgriff und die abgeschiedene Schichtdicke erhöht sich und es können Überbeschichtungen auftreten.

Wasserunlösliche Lösemittel wirken hierbei stärker als wässerlösliche. Zur Verlaufsverbesserung und zum Senken des Schichtwiderstandes kann auch anteilweise ein nichtwasserlösliches, hochsiedendes Lösemittel zugesetzt werden wie Hexylenglykol, Phenoxyethanol, Ethylhexanol, Isodekanol oder 2.2.4-Trimethylpentandiol-1.3-monoisobutyrat. Die eventuell für die Herstellung der Harze notwendigen aprotischen Lösemittel können gegebenenfalls nach der Herstellung des Produktes gegen andere Lösemittel durch Abdestillieren ausgetauscht werden.

Der Feststoffgehalt des Überzugsmittels gemäß der Erfindung beträgt nach Verdünnen mit Wasser zweckmäßig 5 bis 50 Gew.%. Beim Einstellen des Lackes auf einen höheren Festkörper von 25 bis 50 Gew.-%,bevorzugt 30 bis 45 Gew.-%, werden wasserverdünnbare Einbrennlacke erhalten, die durch Tauchen, Spritzen, Walzen usw. auf das zu lackierende Objekt aufgebracht werden können. Verdünnt man dagegen auf einen Festkörper von 5 bis 30 Gew.-%, vorzugsweise 10 bis 20 Gew.-%, so ist der Lack für die elektrophoretische Abscheidung geeignet. Das Bad wird ständig gerührt, um an der Kathodenoberfläche eine gleichmäßige Temperatur aufrechtzuerhalten und ein Absetzen der unlöslichen Bestandteile der Dispersion, z.B. der Pigmente zu verhindern. Der pH-Wert des Lackes liegt im allgemeinen zwischen 4,0 und 7.5, vorzugsweise zwischen 5,0 und 6,5. Liegt der pH-Wert zu niedrig, so ist mit einem Angriff der Säure auf das Eisen von Becken, Rohrleitungen und Pumpen zu rechnen. Die elektrophoretische Abscheidung erfolgt zweckmäßig frühestens 24 Stunden nach Herstellen des Bades. Während dieser Zeit wird zweckmäßig kontinuierlich gerührt, um eine gleichmäßige Verteilung zu erhalten. Als Anode werden elektrisch leitfähige, nicht-korrodierende Elektroden, z.B. aus nicht-rostendem Stahl oder Graphit verwendet. Der an der Kathode zu beschichtende Gegenstand und die Anode werden, wie für die elektrophoretische Abscheidung bekannt, in ein wäßriges Bad eingetaucht. Es können alle metallisch leitenden Werkstücke beschichtet werden, wie Kupfer, Aluminium, Zinn, Zink, Eisen und Legierungen dieser Metalle. Während des Abscheidens wird das Bad bei Temperaturen von zweckmäßig etwa 15 bis 35 ° C gehalten. Festkörper, Abscheidetemperatur und -zeit, sowie Spannung werden so gewählt, daß die gewünschte Schichtstärke nach Abspülen mit Wasser und/oder Ultrafiltrat und Einbrennen der Temperaturen von etwa 150 bis 230 ° C erhalten wird. So steigt z.B. die Schichtstärke mit zunehmender Beschichtungszeit und Abscheidespannung. Beim Anlegen eines elektrischen Stromes mit einer Spannung von zweckmäßig 50 bis 500 Volt zwischen metallisch leitendem Werkstück und einer Gegenelektrode wird das wasserverdünnbare Basisharz an der Kathode koaguliert. Es transportiert hierbei das wasserunlösliche Vernetzungsmittel, Pigmente, Katalysatoren usw. mit . Hierbei kann sich das Verhältnis von Pigment zum Kunstharz-Bindemittel im abgeschiedenen Film zugunsten des Pigmentes verschieben. Gleichzeitig werden Wasser und die zur Neutralisation verwendete Säure im Bad angereichert. Zum Nachfüllen müssen daher konzentrierte Lacke verwendet werden, die diese Verschiebung durch geänderte Mengenverhältnisse ausgleichen. Diese Korrektur kann auch durch geeignete apparative Einrichtungen, z.B. Elektrodialyseverfahren oder Ultrafiltration erfolgen.

Das konzentrierte, mit Wasser zu verdünnende Bindemittel gemäß der Erfindung mit z.B. einem Festkörper von etwa 85 bis 60 Gew.-% kann in üblicher Weise mit Kugelmühle, Dreiwalze oder Perlmühle pigmentiert werden. Hierzu können übliche Pigmente, wie sie z.B. in der DIN 55 944 beschrieben werden, Füllstoffe, Korrosionsschutz-Inhibitoren und Lackhilfsmitteln, wie Antikratermittel, Verlaufmittel oder Antischaummittel, verwendet werden. Naturgemäß wählt man solche aus, die mit Wasser im sauren bis neutralen Medium keine störenden Reaktionen eingehen, keine wasserlöslichen Fremdionen einschleppen und beim Altern nicht so ausfallen, daß das Koagulat nicht wieder aufgerührt werden kann. Die Lacke sind besonders für die Elektrotauchlackierung von Metallen geeignet und geben nach Einbrennen von bevorzugt 15 bis 45 Minuten bei 130 bis 190 ° C glatte, kraterfreie Grundierungen mit verbesserter Kantenabdeckung und Elastizität, sowie wenig vergilbende, glänzende witterungsbeständige Filme mit verbessertem Salzsprühtest. Das Pigment-Bindemittelverhältnis ist abhängig von Dispergierfähigkeit und Viskosität des Bindemittels und liegt im allgemeine zwischen 0,1:1 und 1,5:1.

Falls durch die erfindungsgemäße Bindemittelkombination Überzugsmaterialien bereitgestellt werden sollen, die zu Filmen führen, die eine besonders geringe Kraterneigung haben, die zusätzlich eine Verbesserung des Katenschutzes aufweisen und eine einwandfreie Oberfläche besitzen, ist es günstig 98 bis 85 Gew.-% der Komponente A) (des Amino-Epoxidharzes) mit 2 bis 15 Gew.-% der Komponente B) ( Amino-poly(meth)acrylatharz) zu kombinieren.

Es hat sich gezeigt , daß die Elastizität und die Steinschlagfestigkeit der herstellbaren Filme günstig verbessert werden können, wenn 84 bis 21 Gew.-% der Komponente A) und 16 bis 79 Gew.-% der Komponente B) vorliegen. Andererseits werden Haftungsstörungen und Kantenrost (gemäß Salzsprühtest) in

nicht-vergilbenden Filmen verbessert, ohne daß die Bewitterungsbeständigkeit (Glanzabfall, Kreidung) beeinträchtigt werden, wenn 98 bis 80 Gew.-% der Komponente B) mit 2 bis 20 Gew.-% der Komponente A) kombiniert werden. Bei den vorstehenden Zusammensetzungen handelt es sich somit um bevorzugte Ausführungsformen der erfindungsgemäßen Bindemittel.

## Herstellungsbeispiele

### Amino-Epoxidharz A1

Zu einer Lösung von 283.2 g Polyglycidylether auf Basis Bisphenol A mit einem Epoxid-Äquivalentgewicht von 472 in 161 g Butoxyethanol werden 21 g Diethanolamin, 10.2 g 3(-N.N-Dimethylamino)propylamin und 61.6 g eines Adduktes von 116 g 1.6-Diaminohexan mit 500 g Cardura E 10®, dem Glycidylester einer α-verzweigten $C_9$ bis $C_{11}$-Monocarbonsäure, zugegeben. Die Mischung von Polyether und den Aminen reagiert 4 Stunden lang unter Rühren bei Temperaturen von 85 bis 90 °C. Zum Vervollständigen der Reaktion wird dann noch 1 Stunde auf 120 °C geheizt. Der Epoxidgehalt ist dann Null.
Aminzahl : 98 (mg KOH pro g Festharz)
Festkörpergehalt: etwa 70 Gew.-%

### Amino-Epoxidharz A2

In einem Reaktionsgefäß, das mit Rührer, Thermometer, Tropftrichter und Rückflußkühler ausgestattet ist,werden 706 g eines flüssigen Epoxidharzes auf Basis Bisphenol A mit einem Epoxid-Äquivalentgewicht von ca. 260 in 631 g Ethylglykolacetat bei 60 bis 70 °C gelöst. Nach Zusatz von 0.25 g Hydrochinon und 756 g eines Halbesters aus Tetrahydrophthalsäureanhydrid und Hydroxyethylmethacrylat wird die Temperatur auf 100 bis 110 °C gesteigert. Die Reaktion wird bei dieser Temperatur gehalten bis eine Säurezahl von unter 5 (mg KOH pro g Feststoff) erreicht ist. Anschließend wird das Reaktionsprodukt bei 60 bis 70 °C mit 1017 g einer 70%igen Lösung eines basischen Monoisocyanats in wasserfreiem Ethyglykolacetat umgesetzt. Das Monosiocyanat wurde unter Feuchtigkeitsausschluß hergestellt durch langsames Eintropfen von 241 g Dimethylaminoethanol bei 20 bis 30 °C in eine Lösung von 471 g Toluylendiisocyanat in 305 g wasserfreiem Ethylglykolacetat. Das Lösemittel wurde unter Vakuum abdestilliert und mit Ethoxypropanol auf 70 Gew.-% verdünnt.
Aminzahl: 70 (mg KOH pro g Festharz)

### Amino-poly(meth)acrylatharz B1

725 g Butoxyethanol werden unter Inertgas auf 110 °C unter Einschalten eines Rückflußkühlers erwärmt. Innerhalb von 3 Stunden wird eine Mischung aus 192 g Hydroxyethylacrylat, 137 g Butandiolmonoacrylat, 228 g Glycidyl-methacrylat, 364 g 2-Ethyl-hexylacrylat, 439 g Butylmethacrylat, 438 g Methylmethacrylat, 90 g Styrol und 44 g Azo-bis-isobutyronitril zugegeben. Danach wird 1 Stunde bei 110 °C gehalten, 6 g Azo-bis-isobutyronitril zugegeben und dieser Vorgang nach einer weiteren Stunde wiederholt. Nach 3 Stunden 110 °C wird ein Festkörpergehalt von 72.2 Gew.-% und nach Verdünnen auf 60 Gew.-% mit Butoxyethanol eine Viskosität von 2.14 Pa•s bei 25 °C gemessen. Nach Abkühlen auf 50 °C werden ein Gemisch von 129 g Diethylamin und 201 Isopropanol schnell zugegeben (1.10 Mol Amin auf 1.00 Mol Epoxid). Nach 30 Minuten wird auf 65 °C erwärmt, dann 1 Stunde gehalten, anschließend auf 105 °C aufgeheizt und dann 3 Stunden gehalten. Nach Abkühlen auf 80 °C wird unter Vakuum Isopropanol und Aminüberschuß sorgfältig abdestilliert.Einstellen des Festkörpergehaltes mit Butoxyethanol auf 78 Gew.-%.
Endwerte:
Festkörpergehalt : 78.7 Gew.-% (30 min 150 °C)
Aminzahl : 45 (mg KOH pro g Festharz)
Viskosität : 3.44 Pa•s (nach Verdünnen auf 60 Gew.-% mit Butoxyethanol)

### Amino-poly(meth)acrylatharz B2

725 g Butoxyethanol werden unter Inertgas auf 110 °C unter Einschalten eines Rückflußkühlers erwärmt. Innerhalb von 3 Stunden wird eine Mischung aus 20.7g Butandioldiacrylat, 192 g Hydroxyethylacrylat, 137 g Butandiol-monoacrylat, 251 g Glycidyl-methacrylat, 346 g 2-Ethyl-hexylacrylat, 439 g Butylmethacrylat, 438 g Methylmethacrylat, 90 g Styrol und 44 g Azo-bis-isobutyronitril zugegeben. Danach

wird eine Stunde bei 110° C gehalten, 6 g Azo-bis-isobutyronitril zugegeben und dieser Vorgang nach einer weiteren Stunde wiederholt. Nach 3 Stunden 110° C wird ein Festkörpergehalt von 71.2 Gew.-% (30 min 180° C) und nach Verdünnen auf 50 Gew.-% mit Butoxyethanol eine Viskosität von 2650 mPa•s bei 25° C gemessen. Nach Abkühlen auf 50° C werden ein Gemisch von 142 g Diethylamin und Isopropanol schnell zugegeben (1.10 Mol Amin auf 1.0 Mol Epoxid). Nach 30 Minuten wird auf 65° C erwärmt, dann 1 Stunde gehalten, anschließend auf 105° C aufgeheizt und dann 3 Stunden gehalten. Nach Abkühlen auf 80° C wird unter Vakuum Isopropanol und Aminüberschuß sorgfältig abdestilliert.

Endwerte:

Festkörpergehalt : 77.2 Gew.-% (30 min 180° C)
Aminzahl : 46 (m KOH pro g Festharz)
Viskosität : 4.2 Pa•s (nach Verdünnen auf 50 Gew.-% mit Butoxyethanol).

Vernetzungsmittel C1

1248 g eines Glycidylesters einer α-verzeigten $C_9$ bis $C_{11}$-Monocarbonsäure (Cardura E®) werden auf 100° C unter Inertgas erwärmt und dann unter gutem Rühren in mehreren Portionen 460.8 g Trimellithsäureanhydrid zugegeben. Unter Ausnutzen der exothermen Reaktion wird bis auf 195° C geheizt. Wenn das Harz klar ist, wird auf 145° C abgekühlt und 1.8 ml Benzyldimethylamin als Katalysator zugegeben. Nach Erreichen einer Säurezahl von 1 (mg KOH pro g Festharz) wird auf 100° C abgekühlt und mit 712 g Butoxyethanol verdünnt.

Festkörpergehalt: etwa 70 Gew.-% (nach 40 Minuten Erwärmen auf 180° C)
Epoxid-Äquivalentgewicht: > 10 000.

Vernetzungsmittel C2

666 g Isophorondiisocyanat und 134 g Trimethylolpropan werden mit 431 g wasserfreiem Ethylenglykolacetat gemischt und unter Rühren und Ausschluß von Luftfeuchtigkeit innerhalb 1 Stunde auf 60° C erwärmt. Das zunächst feste Trimethylolpropan schmilzt hierbei und reagiert dann langsam innerhalb einer weiteren Stunde, wobei die Temperatur auf 90° C erhöht wird. Zum Vervollständigen der Reaktion hält man noch weitere 3 Stunden bei 90° C, wonach ein NCO-Äquivalentgewicht von 410 erhalten wird. Dann werden 366 g ε-Caprolactam in 3 Stunden so langsam zugegeben, daß die Reaktionstemperatur von 100° C nicht überschritten wird. Man hält diese Temperatur bis die NCO-Zahl unter 0,1% abgesunken ist. Das Lösemittel wird unter Vakuum weitgehend abdestilliert. Dann wird mit Butoxyethanol auf 80 Gew.-% verdünnt.

Vernetzungsmittel C3

875 g eines Umsetzungsproduktes von 1 Mol Trimethylolpropan mit 3 Mol Toluylendiisocyanat (Desmodur L®), das 75%ig in Ethylacetat gelöst ist, wird unter Ausschluß von Feuchtigkeit und Überleiten von trockenem Inertgas unter gutem Rühren auf 90° C erwärmt. Es werden 342 g ε-Caprolactam in 3 Stunden so langsam zugegeben, daß eine Reaktionstemperatur von 100° C nicht überschritten wird. Man hält diese Temperatur, bis die NCO-Zahl unter 0,1% abgesunken ist. Das Lösemittel wird über Vakuum weitgehend abdestilliert und mit Butoxyethanol auf 80 Gew.-% verdünnt.

Beispiel 1

108.4 g Titandioxid und 2.42 g Ruß werden gemeinsam mit 1.41 g Bleisilikat und 3.04 g Bleioctoat in 253 g Amino-Epoxidharz A2 angerieben und mit 3.1 g Amino-poly(meth)acrylatharz B1 und 57.6 g Vernetzungsmittel C3 gemischt. Nach Neutralisation mit 5.96 g Ameisensäure wurde auf 2 Liter mit vollentsalztem Wasser verdünnt. Auf zinkphosphatiertem Karosserieblech wurde bei 250 Volt 2 min bei einer Badtemperatur von 28° C beschichtet, mit Wasser abgespült und 30 min bei 180° C eingebrannt. Der eingebrannte Film zeigte bei einer Trockenfilmstärke von 20 µm keine Krater.

Festkörper ca. 18 Gew.-%.

Vergleichsbeispiel A

Es wurde mit der gleichen Rezeptur wie im Beispiel 1 gearbeitet , aber das Amino-poly(meth)-acrylatharz B1 durch eine höhere Menge (284 g) Amino-Epoxidharz A2 ersetzt. Der abgeschiedene Film zeigte Oberflächenstörungen in Form von Kratern.

Festkörper ca. 18 Gew.-%.

Beispiel 2

In einer Perlmühle werden 198 g Amino-poly(meth)acrylatharz B2 , 22 g Amino-Epoxidharz A1, 85.5 g eines Rutilpigmentes, 7.4 g eines handelsüblichen Extenders auf Silikatbasis und 18 g Ethoxypropanol bei einer Temperatur unter 50 °C 30 min lang gerieben. Danach werden 79.6 g Vernetzungsmittel C2 zugegeben und unter dem Dissolver vermischt, wobei mit 9.4 g Ameisensäure (50%ig) neutralisiert wird. Unter Rühren wird mit vollentsalztem Wasser vorsichtig auf 2 Liter verdünnt.
Festkörper ca. 15 Gew.-%.
Auf zinkphosphatiertem Stahlblech wird bei einer Badtemperatur von 30 °C 2 min lang mit 150 Volt beschichtet. Nach Abspülen mit Wasser und 30 min langem Einbrennen bei 180 °C ergab sich eine Trockenfilmstärke von 30 µm.

Vergleichsbeispiel B

Es wurde mit der gleichen Rezeptur wie im Beispiel 2 gearbeitet, aber das Amino-Epoxidharz A1 durch eine höhere Menge (220 g) Amino-poly(meth)acrylatharz B2 ausgeglichen.

| Ergebnisse des Salzsprühtestes nach DIN 50021 (504 h) | | |
|---|---|---|
| | Haftstörungen | Kantenrost |
| Vergleich B | 6.5mm | 5 |
| Beispiel 2 | 2.5mm | 0-1 |

**Patentansprüche**

1. Fremdvernetzende Bindemittelkombination für mit Wasser verdünnbare Lacke, enthaltend
   A) 1 bis 99 Gew.-% eines primäre und/oder sekundäre Hydroxylgruppen und primäre, sekundäre und/oder tertiäre Aminogruppen enthaltenden gesättigten oder ungesättigten organischen Kunstharz-Bindemittels auf der Basis von Epoxidharzen und
   B) 99 bis 1 Gew.-% primäre, sekundäre und/oder tertiäre Aminogruppen enthaltendes gesättigtes organisches Kunstharz-Bindemittel, hergestellt aus radikalisch polymerisierbaren Monomeren.

2. Fremdvernetzende Bindemittelkombination gemäß Anspruch 1, dadurch gekennzeichnet, daß die Komponente A) ein basisches, Epoxidgruppen-freies Additionsprodukt von Epoxidharzen und Aminen ist, mit einer Aminzahl von 30 bis 150 (mgKOH pro g Festharz), einer Hydroxylzahl von 50 bis 500 (mgKOH pro g Festharz), einer zahlenmittleren Molmasse ($\overline{M}n$) von 250 bis 10 000 und einer Viskosität von 0,1 bis 10 Pa•s (in 50%iger Lösung in Monoglykolethern bei 25 °C).

3. Fremdvernetzende Bindemittelkombination nach Anspruch 1 oder 2, dadurch gekennzeichnet, daß die Komponente B) ein basisches Epoxidgruppen-freies Polymerisationsharz ist, mit einer Amin-zahl von 30 bis 150, einer Hydroxylzahl von 30 bis 450, einer zahlenmittleren Molmasse ($\overline{M}n$)von 1000 bis 500 000, und einer Viskosität von 0,1 bis 10Pa•s in 50%iger Lösung in Butoxyethanol bei 25 °C, sowie einer Glasübergangstemperatur von -50 bis +150 °C.

4. Fremdvernetzende Bindemittelkombination nach Anspruch 1, 2 oder 3, dadurch gekennzeichnet, daß die Komponente B) erhältlich ist aus radikalisch polymerisierbaren
   a) aminogruppenhaltigen Monomeren und
   b) hydroxylgruppenhaltigen Monomeren oder
   ab) aminogruppen- und hydroxylgruppenhaltigen Monomeren und jeweils
   c) Monomeren, die außer einer ungesättigten Bindung keine weiteren reaktiven Gruppen enthalten, wobei entweder 6 bis 40 Gewichtsteile der Komponente a) und 4 bis 50 Gewichtsteile der Komponente b) oder 8 bis 60 Gewichtsteile der Komponente ab), pro 10 bis 90 Gewichtsteile der Komponente c) eingesetzt werden.

**5.** Fremdvernetzende Bindemittelkombination gemäß Anspruch 4, dadurch gekennzeichnet, daß von den 10 bis 90 Gewichtsteilen der Komponente c) bis zu 10 Gewichtsteile durch d) polyungesättigte Monomere ersetzt sind.

**6.** Fremdvernetzende Bindemittelkombination nach einem der vorhergehenden Ansprüche, dadurch gekennzeichnet, daß zusätzlich
C) 5 bis 50 Gew.-% von mindestens zweiwertigen Vermetzungsmitteln mit einer zahlenmittleren Molmasse ($\overline{M}n$) von 170 bis 10 000, mit blockierten Isocyanatgruppen und/oder umesterungsfähigen Estergruppen, bezogen auf die Summe der Gewichtsteile der Komponenten A),B) und C), vorhanden sind.

**7.** An der Kathode abscheidbares wäßriges Elektrotauchlacküberzugsmittel (KTL-Bad), das ein Kunstharzbindemittel mit Aminogruppen, welches durch Protonisieren mit Säuren wasserlöslich gemacht werden kann, in Kombination mit Vernetzungsmitteln und gegebenenfalls hydroxyfunktionellen Harzen enthält, und das gegebenenfalls Pigmente, Füllstoffe, Korrosionsschutzinhibitoren, Lackhilfsmittel, Katalysatoren und in einer Menge von bis zu 20 Gew.-%, bezogen auf das Gesamtgewicht des Überzugsmittels, organische Lösemittel enthält, dadurch gekennzeichnet, daß es als Kunstharzbindemittel die fremdvernetzende Bindemittelkombination gemäß einem der Ansprüche 1 bis 6 enthält.

**8.** Verwendung des wäßrigen Bades gemäß Anspruch 7 zum Beschichten von Gegenständen mit elektrisch leitender Oberfläche an der Kathode.

## Claims

**1.** An externally crosslinkable binder combination for water-dilutable lacquers, containing
A) 1 to 99 wt.% of a primary- and/or secondary-hydroxyl-group- and primary-, secondary- and/or tertiary-amino-group-containing saturated or unsaturated organic synthetic resin binder based on epoxide resins and
B) 99 to 1 wt.% of a primary-, secondary- and/or tertiary-amino-group-containing saturated organic synthetic resin binder produced from monomers capable of radical polymerization,

**2.** An externally crosslinkable binder combination according to Claim 1, characterized by the fact that Component A) is a basic, epoxide-group-free addition product of epoxide resins and amines, with an amine value of 30 to 150 (mg KOH per g solid resin), a hydroxyl value of 50 to 500 (mg KOH per g solid resin), a number-average molecular weight ($\overline{M}n$) of 250 to 10,000 and a viscosity of 0.1 to 10 Pa.s in 50 % solution in monoglycol ethers at 25 °C.

**3.** An externally crosslinkable binder combination according to Claim 1 or 2, characterized by the fact that Component B) is a basic epoxide-group-free polymer resin with an amine value of 30 to 150, a hydroxyl value of 30 to 450, a number-average molecular weight ($\overline{M}n$) of 1000 to 500,000, a viscosity of 0.1 to 10 Pa.s in 50 % solution in butoxyethanol at 25 °C and a glass transition temperature of -50 to +150 °C.

**4.** An externally crosslinkable binder combination according to Claim 1, 2 or 3, characterized by the fact that Component B is obtainable from
a) amino-group-containing monomers and
b) hydroxyl-group-containing monomers or
ab) amino- and hydroxyl-group-containing monomers and in each case
c) monomers which, apart from one unsaturated bond, contain no other reactive groups, either 6 to 40 parts by weight of Component a) and 4 to 50 parts by weight of Component b) or 8 to 60 parts by weight of Component ab) being charged per 10 to 90 parts by weight of Component c),
all the said monomers being capable of radical polymerization.

**5.** An externally crosslinkable binder combination according to Claim 4, characterized by the fact that, of the 10 to 90 parts by weight of Component c), up to 10 parts by weight are replaced by d) polyunsaturated monomers.

**6.** An externally crosslinkable binder combination according to one of the previous claims, characterized

by the fact that in addition

C) 5 to 50 wt.%, relative to the sum of parts by weight of Components A), B) and C), of at least divalent crosslinking agents with a number-average molecular weight ($\overline{M}n$) of 170 to 10,000, with blocked isocyanate groups and/or ester groups capable of transesterification are present.

**7.** A cathodically depositable aqueous electrocoating agent (cataphoretic coating bath) that contains a synthetic resin binder with amino groups, the synthetic resin binder being solubilizable in water by protonation with acids, in combination with crosslinking agents and optionally hydroxy-functional resins, the aqueous electrocoating agent optionally containing pigments, fillers, corrosion inhibitors, lacquer additives, catalysts and up to 20 wt.%, relative to the total weight of the electrocoating agent, of organic solvents, characterized by the fact that it contains as synthetic resin binder the externally crosslinkable binder combination according to one of Claims 1 to 6.

**8.** The use of the aqueous bath according to Claim 7 for the cathodic coating of objects with electrically conductive surface.

**Revendications**

**1.** Composition de liants durcissables par un agent durcissant utilisable dans des revêtements diluables à l'eau, comprenant

A) 1 à 99% en poids d'un liant en résine synthétique organique, saturée ou insaturée, contenant des groupes hydroxyle primaires et/ou secondaires et des groupes amino primaires, secondaires et/ou tertiaires, à base de résines époxy, et

B) 99 à 1% en poids de liant en résine synthétique organique saturée contenant des groupes amino primaires, secondaires et/ou tertiaires, préparé à partir de monomères polymérisables par voie radicalaire.

**2.** Composition de liants durcissables par un agent durcissant selon la revendication 1, caractérisée en ce que le constituant A) est un produit d'addition de résines époxy et d'amines, basique, exempt de groupes époxy, ayant un indice d'amine de 30 à 150 (mg de KOH par g de résine solide), un indice d'hydroxyle de 50 à 500 (mg de KOH par g de résine solide), une masse molaire moyenne en nombre ($\overline{M}n$) de 250 à 10 000 et une viscosité de 0,1 à 10 Pa.s (en solution à 50% dans des monoéthers de glycol à 25 °C).

**3.** Composition de liants durcissables par un agent durcissant selon l'une des revendications 1 ou 2, caractérisée en ce que le constituant B) est une résine de polymérisation basique, exempte de groupes époxy, ayant un indice d'amine de 30 à 150, un indice d'hydroxyle de 30 à 450, une masse molaire moyenne en nombre ($\overline{M}n$) de 1000 à 500 000, et une viscosité de 0,1 à 10 Pa.s en solution à 50% dans le butoxyéthanol à 25 °C, ainsi qu'une température de transition vitreuse de -50 à +150 °C.

**4.** Composition de liants durcissables par un agent durcissant selon l'une quelconque des revendications 1, 2 ou 3, caractérisée en ce que le constituant B) peut être obtenu à partir

a) de monomères contenant des groupes amino et

b) de monomères contenant des groupes hydroxyle ou

ab) de monomères contenant des groupes amino et des groupes hydroxyle et dans chaque cas

c) de monomères qui, hormis une liaison insaturée, ne contiennent pas d'autres groupes réactifs, polymérisables par voie radicalaire,

tandis qu'on utilise soit 6 à 40 parties en poids du constituant a) et 4 à 50 parties en poids du constituant b), soit 8 à 60 parties en poids du constituant ab), pour 10 à 90 parties en poids du constituant c).

**5.** Composition de liants durcissables par un agent durcissant selon la revendication 4, caractérisée en ce que jusqu'à 10 parties en poids des 10 à 90 parties en poids du constituant c) sont remplacées par d) des monomères polyinsaturés.

**6.** Composition de liants durcissables par un agent durcissant selon l'une quelconque des revendications précédentes, caractérisée en ce que sont en outre présents

C) 5 à 50% en poids d'agents de réticulation au moins bivalents ayant une masse molaire moyenne

en nombre ($\overline{M}n$) de 170 à 10 000, avec des groupes isocyanate bloqués et/ou des groupes ester aptes à la transestérification, par rapport à la somme des parties en poids des constituants A), B) et C).

**7.** Masse de revêtement aqueuse pour électrophorèse déposable à la cathode (bain de KTL), contenant un liant en résine ayant des groupes amino, qui peut être rendu hydrosoluble par protonisation avec des acides, en combinaison avec des agents de réticulation et éventuellement des résines à fonctionnalité hydroxy, et contenant éventuellement des pigments, des charges, des inhibiteurs anticorrosion, des adjuvants pour peinture, des catalyseurs et en une quantité allant jusqu'à 20% en poids, par rapport au poids total de la masse de revêtement, des solvants organiques, caractérisée en ce qu'elle contient en tant que liant en résine synthétique la composition de liants durcissables par un agent durcissant selon l'une quelconque des revendications 1 à 6.

**8.** Utilisation du bain aqueux selon la revendication 7 pour le revêtement d'objets ayant une surface électriquement conductrice à la cathode.